# EUROPEAN PATENT SPECIFICATION

(11) **EP 1 368 731 B1**
(45) Date of publication and mention of the grant of the patent: **10.02.2010**
(21) Application number: 01972020.0
(22) Date of filing: 06.09.2001
(51) Int. Cl.: G06F 5/06

(54) **SIGNAL PROCESSING APPARATUS**
SIGNALVERARBEITUNGSANLAGE
APPAREIL DE TRAITEMENT DE SIGNAUX

(30) Priority: 15.09.2000 EP 00203188
(43) Date of publication of application: 10.12.2003
(73) Proprietor: NXP B.V., 5656 AG Eindhoven (NL)
(72) Inventor: KANG, I-Chih, NL-5656 AA Eindhoven (NL); VAN DER WERF, Albert, NL-5656 AA Eindhoven (NL)
(74) Representative: Schouten, Marcus Maria
(86) International application number: PCT/EP2001/010332
(87) International publication number: WO 2002/023476

(56) References cited:
- US-A- 4 229 790
- US-A- 5 995 751
- US-A- 6 112 288

## Description

Processing of media signals like video signals, audio signals and graphics signals requires a high throughput processing apparatus. These signals represent one or higher dimensional, humanly perceptible information as a function of for example time and/or spatial x/y directions. Samples represent this information at successive sampling points along these dimensions. Together, these samples form a vast amount of information that have to be processed at least real-time, that is, keeping up with the speed with which the media signals develop.

Processing signal data items that correspond to successive sampling points involves subjecting the signal data item for each sampling point to a series of different processing steps. For example, for MPEG decoding, each signal data item represents a block of pixels and contains a set of coefficients for that block of pixels. MPEG decoding involves decoding the coefficients, rearranging them and performing an IDCT transform.

In order to keep up with the required processing speed it is known to perform such processing steps in parallel. Different signal processor units are provided, each performing a specific processing task. A signal processor receives a stream of data-items, performs its processing task on each data item and passes its result to a next signal processor unit for performing a next task. Thus, the next signal processor unit in turn receives a stream of data items and the processor units perform different tasks on the streams in parallel.

The signal processor units have to be synchronized with one another in order to operate properly, for example to ensure that a receiver processor unit starts processing a signal data-item once that signal data-item has been produced by a source signal processor unit. One way of realizing synchronization is to use lock-step synchronization. In this case, the signal processor units are arranged so that each signal processor unit uses exactly the same number of processing cycles before the signal processor unit starts with the next signal data-item. When the different signal processor units are started with a proper delay relative to one another, this ensures that each signal processor unit will have exactly one new signal data item at its input precisely when it finishes processing the preceding signal data-item. Lock-step operation requires a very tight coupling between the signal processor units, which often makes it difficult to make full use of their processing capabilities. For example, when the number of processing cycles needed to process a signal data-item is variable, it is necessary to pause the signal processor unit each time that it needs less than the maximum number of processing cycles. Moreover, lock-step operation requires specialized design and considerable overhead.

To ease the problems with lock-step operation, it has been known to use FIFO channels between the different signal processor units. FIFO channels are known per se. A FIFO channel has room for storing a plurality of signal data-items. In a FIFO channel, writing of data items by a source signal processor is not dependent on processing by the receiver signal processor unit. The FIFO channel merely stores the signal data items produced by the source signal processor unit and indicates to that unit whether the FIFO channel has room for writing more signal data-items. The FIFO channel indicates to the receiver signal processor unit whether the FIFO channel is empty or not, allowing the receiver signal processor unit to read signal data-items from the FIFO channel when desired.

Thus, writing into the FIFO channel and reading from the FIFO channel are not synchronized to each other, other than that writing must cease when the FIFO is full and reading must cease when the FIFO channel is empty, but when the FIFO channel contains storage space for a sufficient number of signal data items, say four or more, this does not lead to unnecessary slow down of the signal processor units.

The use of a FIFO channel for passing signal data items from one signal processor unit makes it possible to use the capabilities of the signal processor units more fully and it simplifies design, but FIFO channels with a considerable amount of memory are needed to store a sufficient number signal data-items. If the signal data-items have to be sent to multiple signal processing units that operate independently, multiple FIFO channels are needed, each with such a large amount of storage space for signal data-items. Similarly, if the signal data-items from a first signal processor unit are received and manipulated with a second signal processor unit and passed to a third signal processor unit, two FIFO channels are needed, each with such a large amount of storage space.

JP 07 111 505 discloses an asynchronous transfer mode switchboard consisting of two processors, a common memory area and an I/O. The area includes a buffer area which functions as a buffer that performs communication of data between both processors and a pointer area which stores 1st and 2nd pointers that show the final write address and the final read address respectively. Furthermore the area is cyclically used and at the same time the writing operations using both pointers are inhibited to the unwritten areas of the area.

Amongst others, it is an object of the invention to provide for a signal processing apparatus with a number of signal processor units that are capable of operating in parallel and that are loosely coupled, in which the required amount of memory space for the FIFO channels can be reduced.

The signal processing apparatus according to the invention is set forth in the independent claims. According to the invention, a FIFO channel between two signal processor units is used to pass memory address indicators that each indicate the address of a region in a memory where a signal data-item is stored. In this way, one obtains the advantage of the loose synchronization provided by a FIFO channel in combination with a significantly reduced amount of storage needed for the FIFO channel, because only the indicators and not the entire signal data item needs to be stored.

This can be applied for example if a first signal processor unit receives the memory address indicators from a FIFO channel, modifies the signal data items in memory and passes the memory address indicators to a second signal processor unit. Thus, the same memory regions can be used by each signal processor unit, without putting the signal data-items into different FIFO channels. In another example, the first signal processing unit merely rearranges the sequence of the memory address indicators. Thus, shuffling required for example for time interleaving or matrix transposition is performed without having to copy the signal data-items to different FIFO channels (in fact even without accessing the memory with the first signal processor unit, thus reducing the required bus bandwidth to the memory). In an example of this, during image processing an image is divided into lines and the lines are divided into "stripes", each containing for example 16 pixels. Each data-item contains data for a stripe (for example 16 pixel values). By rearranging the sequence of the memory address indicators, data for which the memory address indicators arrive linewise at a signal processor unit can be changed to data for which the memory address indicators leave the processor unit block wise, in blocks of a plurality of stripes (e.g. 16 stripes) in the direction transversal to the lines, before the memory address indicators are followed by memory address indicators for successive blocks in the line direction. In a further example, two or more streams of memory address indicators comprising the same memory address indicators is output to two or more FIFO channels, connected to different signal processor units (or different ports of the same signal processor units). Thus, it is not necessary to output copies of the underlying signal data-items to the different FIFO channels.

An embodiment of the signal processing apparatus comprises a return FIFO channel between the signal processor units. The memory address indicators are passed from a first signal processor unit to a second signal processor unit to indicate the region of memory where the first signal processor unit has written the signal data-items. The second signal processor units passes these memory address indicators back to the first signal processor unit, so that the first signal processor unit can reuse the regions in memory for subsequent data items. Thus, the first signal processor unit does not need to obtain different memory regions each time it writes a new signal data-item. In a further embodiment a set of memory address indicators is inserted into the return FIFO channel initially. This enables the FIFO channel mechanism to trigger the signal processor units to start processing. Preferably, the return FIFO channel is also used to synchronize operation of the first and second signal processor units. Note that the memory address indicators need not return (and be reused) in the sequence in which they have originally been sent.

In case the memory address indicators are passed from one signal processor unit to another along a series of signal processor units, only the last processor unit in the series preferably has a return FIFO channel to the first signal processor unit in the series. The intermediate signal processor units in the series need not have such a return FIFO channel. Alternatively, there may be a chain of return FIFO channels along (part of) the series of signal processor units. This allows a more modular design and it may allow an intermediate signal processor unit in the series to perform some wrap up processing once it is informed that a signal data-item has been received.

In case copies of the memory address indicators are output from a first signal processor unit to different FIFO channels to different signal processor units, preferably return FIFO channels are used corresponding to each of these FIFO channels. In this case the first signal processor unit reuses the memory region indicated by a memory address indicator when the first signal processor has received back the memory address indicators from all return FIFO channels. This may be implemented by keeping a counter for each memory region involved, the counter being updated for each returned memory address indicator and the region being reused once it is detected that the counter reaches a predetermined value.

These and other advantageous aspects of the signal processor apparatus and signal processing method according to the invention will be described in more detail using the following figures.
Figure 1 shows a part of a first signal processing apparatus;
Figure 2 shows a part of a second signal processing apparatus;
Figure 3 shows a part of a third signal processing apparatus;
Figure 4 shows a part of a fourth signal processing apparatus.

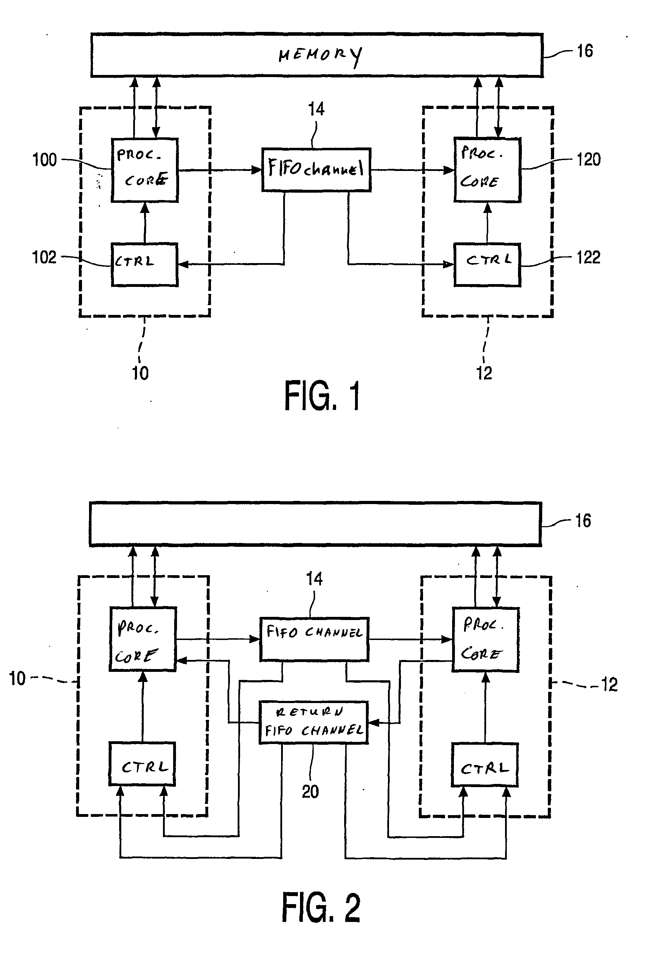

Figure 1 shows part of a signal processing apparatus. The apparatus contains a first signal processor unit 10, a second signal processor unit 12, a FIFO channel 14 (First In First Out channel) and a memory 16. The first signal processor 10 contains a signal processing core 100 and a controller 102. The signal processing core 100 is connected to a data input of the FIFO channel 14. The second signal processor 12 contains a signal processing core 120 and a controller 122. A data output of the FIFO channel 14 is connected to an input of signal processing unit 120. The FIFO channel 14 has a "FIFO full/not full" output coupled to the controller 102 of the first signal processor unit 10, which in turn has a control output coupled to the processor core 100. The FIFO channel 14 has a "FIFO empty/not empty" output coupled to the controller 122 of the second signal processor unit 12, which in turn has a control output coupled to the processor core 120. The processor cores 100, 120 have an interface to the memory 16. In the figure, the memory 16 is shown as a dual port memory, the processor cores 100, 120 being coupled to different memory ports, but alternatively the processor cores 100, 120 may also be coupled to a single port of the memory 16 via a common bus (not shown). The processor cores may be dedicated processor cores, for example for performing a discrete cosine transform on a data item that represents a block of pixel values or a coefficients for such a block, or for example Huffman compressor units etc. The processor cores can also be more general purpose processor units, programmed to perform a specific signal processing task. In a simple, buf slow embodiment several processor cores might even be implemented with different programs running on the same processing hardware.

In operation, the controller 102 in the first processor unit 10 monitors the full/not full output of the FIFO channel 14. The processor core 100 of the first processor unit computes a data-item and writes it to a region in memory 16 that is allocated for that data-item. If this output indicates that the FIFO is not full, the controller 102 allows the processor core 100 to applies a memory address indicator of the region where the data-item has been written (for example a memory address of the start of the region in memory where the data item is stored) to FIFO channel 14. Once the processor core 100 has written the memory address indicator, the processor core 100 may start generating a next data item.

The controller 122 in the second processor unit 12 monitors the empty/not empty output of the FIFO channel 14. If this output indicates that FIFO is not empty, the controller 122 signals the processor core 120 to process a data-item. When the processor core 120 has time to start processing a new data item and the controller 122 signals that this is possible, the processor core 120 reads a memory address indicator from the output of the FIFO channel. The processor core 120 uses the memory address indicator to read at least of the data-item from the region in memory 16 indicated by the memory address indicator and processed the data-item.

Figure 2 shows part of a signal processing apparatus similar to that of figure 1. In addition to the components shown in figure 1, figure 2 shows a return FIFO channel 20. The return FIFO channel 20 has a data input coupled to the processor core of the second processor unit 12 and a data output coupled to the processor core of the first data processor unit 10. The return FIFO channel 20 has a full/not full output coupled to the controller of the second processor unit 12 and an empty/not empty output coupled to the controller of the first processor unit 10.

In operation, the controller of the second processor unit 12 allows the processor core of the second processor unit 12 to return a memory address indicator to return FIFO channel 20 after processing the corresponding data-item only if the return FIFO channel indicates that it is not full. The controller of the first signal processing unit 10 allows the processor core of the first processor unit 10 to start writing data for a data-item to memory 16 only if the return FIFO channel 20 indicates that the return FIFO channel 20 is not empty. In that case, the processor core loads a memory address indicator from the return FIFO channel 20 and uses this indicator to address a region in memory 16 where the data-item is stored.

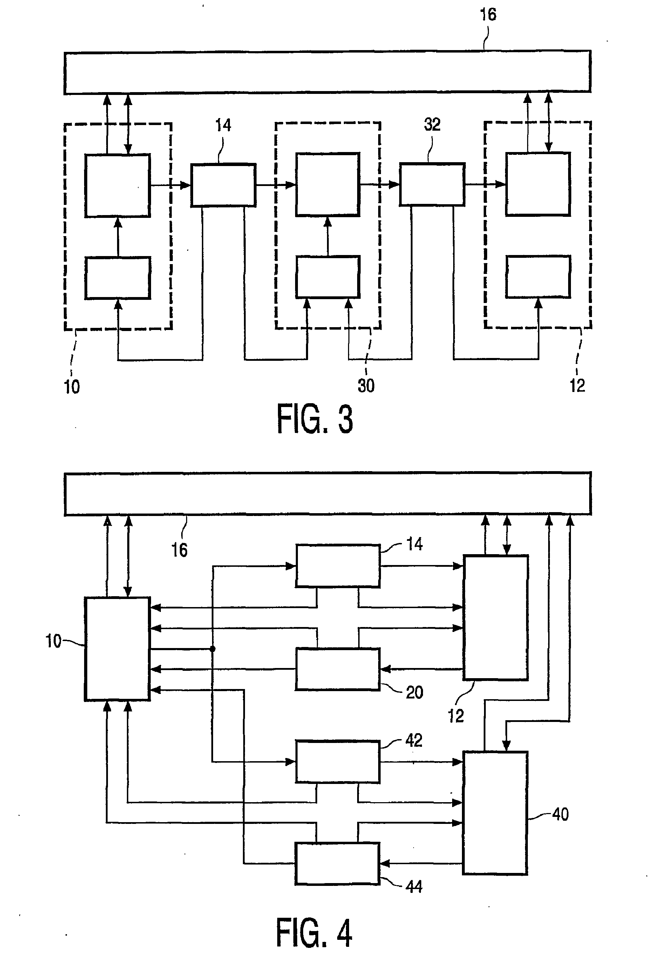

Figure 3 shows part of a signal processing apparatus similar to that of figure 2. In addition to the components shown in figure 1, figure 2 shows an intermediate signal processor unit 30 and a further FIFO channel 32. The FIFO channel 14 is connected between the first processor unit 10 and the intermediate processor unit 30. The further FIFO channel 32 is connected between the intermediate processor unit 30 and the second processor unit 12.

In operation, the FIFO channel 14 operates with respect to the first processor unit 10 and the intermediate processor unit 30 as described for the FIFO channel 14 in figure 1 with respect to the first and second processor unit 10, 12 respectively. Similarly, the further FIFO channel 14 operates with respect to the intermediate processor unit 30 and the second processor unit 12 as described for the FIFO channel 14 in figure 1 with respect to the first and second processor unit 10, 12 respectively. The return FIFO channel 20 operates as described in figure 2.

The intermediate signal processor unit 30 inputs memory address indicators from the FIFO channel 14 and outputs these memory address indicators in a reshuffled order to further FIFO channel 32. The intermediate processor unit 30 does not access the data-items in the regions indicated by the memory address indicators. Such an intermediate processor unit 30 has an application in MPEG encoding. MPEG requires some reshuffling of incoming frames. One represents successive incoming blocks during MPEG denoding by
mblocks[t][0], mblocks[t][1], mblocks[t][2], mblocks[t+1][0],
mblocks[t+1][1],mblocks[t+1][2]
and so on for increasing time "t". MPEG decoding requires that such blocks be reshuffled before being applied to a compressor processor unit. The compressor processor unit requires the blocks in the following order
mblocks[t][0], mblocks[t-1][1], mblocks[t-1][2], mblocks[t+1][0],
mblocks[t] [1],mblocks[t] [2]
and so on. By using a memory address indicator for each one of the "mblocks", reshuffling is easily implemented with the intermediate processor unit 30, allowing the entire system to operate as a pipeline that processes blocks one by one.

Figure 4 shows part of a signal processing apparatus similar to that of figure 2. In addition to the components shown in figure 1, figure 2 shows a third signal processor unit 40, a further FIFO channel 42 and a further return FIFO channel 44. The further FIFO channel 42 is connected between the first processor unit 12 and the third processor unit 40. The further FIFO return channel 44 is connected between the third processor unit 12 and the first processor unit 40.

In operation, the FIFO channel 14 and the return FIFO channel 20 operate with respect to the first and second processor unit 10, 12 as described with respect to figure 2. The further FIFO channel 42 and the further return FIFO channel 44 operate with respect to the first and third processor unit 10, 40 as described for the first and second processor unit 10, 12 for respect to figure 2. The only exception is that the first processor unit 10 inputs the memory address indicators from both return FIFO channels 20, 44 and checks which memory address indicators have been received from both return FIFO channels 20, 44. Once the same memory address indicator has been received back from both return FIFO channels 20, 24 the processor core of the first processor core is allowed to start writing data for a new data item to the region indicated by that memory address indicator.

Without deviating from the invention, the second and third processor unit 12, 40 may be replaced by a chain of processor units, like the chain containing the intermediate processor unit 30 and the second processor unit 12 in figure 3. Similarly the first processor unit 10 may be connected as shown to more than the first and third processor units 12, 40. In this case, a memory address indicator must be returned from all return FIFO channels, before the first processor unit 10 uses the corresponding region in memory 16 to write a new data item. The first processor unit 10 may use locations in memory 16, each location corresponding to a respective memory address indicator value, to maintain a count of the number of times that memory address indicator value has been returned. Once it follows from that count that the memory address indicator has been returned from all return channel have been returned, the corresponding region in memory is resued. Of course, these counter values need not be kept in memory: separate counter registers (not shown) may be used as an alternative.

The apparatus according to the invention can be applied to data items for any size. For example, a data-item might correspond the image location(s) of a single pixel, a entire image frame, an image line, a block of pixels. a stripe of pixels in a block etc. The larger the data-item, the more memory will be saved by the invention. However, by using relatively smaller data-items the amount of parallelism during processing can be increased, because each processor unit has to process less information at a time.

## Claims

1. A signal processing apparatus, comprising:
- a memory (16);
- a source signal processor unit (10), arranged to write a series of signal data items to the memory, successive signal data items relating to samples along at least one dimension of an at least one dimensional physical signal;
- a receiver signal processor unit (12), arranged to read the series of signal data items from the memory;
- a FIFO channel (14) between the source signal processor unit and the receiver signal processor unit, the source signal processor unit being arranged to successively send memory address indicators to the receiver signal processor unit via the FIFO channel, each memory address indicator indicating an address of a region in the memory where one of the signal data items has been written, when that one of the signal data items is available for reception, reading and writing of the receiver signal processor unit and the source signal processor unit respectively being synchronized to one another through the availability of the FIFO channel for emptying and filling the FIFO channel in a FIFO sequence;
- a return FIFO channel (20) coupled between the receiver signal processor unit and the source signal processor unit, the receiver signal processor unit being arranged to successively send the memory address indicators back to the source signal processor unit via the return FIFO channel, when the receiver signal processor unit has finished reading the corresponding signal data-items, the source signal processor unit receiving the memory address indicators back from the return FIFO channel, the source signal processor unit reusing the corresponding region of the memory for writing a subsequent signal data item.

2. A signal processing apparatus according to claim 1, comprising initialization means arranged to insert a set of memory address indicators in the return FIFO, the memory address indicators indicating regions of memory allocated to the source signal processor unit for writing the data-items, the initialization means inserting at least one of the set of memory address indicators prior to start-up of processing by the source signal processor unit.

3. A signal processing apparatus according to claim 1, wherein reading and writing of the receiver signal processor unit and the source signal processor unit respectively are synchronized to one another through the availability of the FIFO channel and the return FIFO channel for emptying and filling the FIFO channel and the return FIFO channel in their respective FIFO sequences.

4. A signal processing apparatus according to claim 1, comprising a reordering signal processor unit (30) and a further FIFO channel (32), the source signal processor unit (10) being coupled to the reordering signal processor unit via the FIFO channel, the reordering signal processor unit being coupled to the receiver signal processor unit (12) via the further FIFO channel, the reordering signal processor unit being arranged to receive the memory address indicators from the FIFO channel in an incoming sequence and to send the received memory address indicators to the receiver signal processor unit in a rearranged sequence that differs from the incoming sequence, operation of the receiver signal processor unit and the source signal processor unit being synchronized to one another through the availability of the FIFO channel for emptying and filling the FIFO channel in the incoming FIFO sequence, operation of the receiver signal processor unit and the reordering signal processor unit being synchronized to one another through the availability of the further FIFO channel for emptying and filling the further FIFO channel in the rearranged FIFO sequence.

5. A signal processing apparatus according to claim 1, comprising a reordering signal processor unit (30) and a further FIFO channel (32), the source signal processor unit being coupled to the reordering signal processor unit via the FIFO channel, the reordering signal processor unit being coupled to the receiver signal processor unit via the further FIFO channel, the reordering signal processor unit being arranged to receive the memory address indicators from the FIFO channel in an incoming sequence and to send the received memory address indicators to the receiver signal processor unit in a rearranged sequence that differs from the incoming sequence, operation of the receiver signal processor unit and the source signal processor unit being synchronized to one another through the availability of the FIFO channel for emptying and filling the FIFO channel in the incoming FIFO sequence, operation of the receiver signal processor unit and the reordering signal processor unit being synchronized to one another through the availability of the further FIFO channel for emptying and filling the further FIFO channel in the rearranged FIFO sequence, writing by the source signal processor unit being synchronized to reading by the receiving signal processor unit the availability of the return FIFO channel for emptying and filling the return FIFO channel in the FIFO sequence of the return FIFO channel.

6. A signal processing apparatus according to claim 1, comprising:
- a further receiver signal processor unit (42), arranged to read the series of signal data items from the memory,
- a further FIFO channel (44) between the source signal processor unit and the further receiver signal processor unit, the source signal processor unit being arranged to successively send the memory address indicators to the further receiver signal processor unit via the further FIFO channel,
- a further return FIFO channel coupled between the further receiver signal processor unit and the source signal processor unit, the further receiver signal processor unit being arranged to successively send the memory address indicators back to the source signal processor unit via the further return FIFO channel, when the further receiver signal processor unit has finished reading the corresponding signal data-items, the source signal processor unit receiving the memory address indicators back from the further return FIFO channel, the source signal processor unit reusing a region of the memory for writing a subsequent signal data item when the source signal processor unit has received back the corresponding memory address indicator from both the return FIFO channel and the further return FIFO channel.

7. A signal processing apparatus according to claim 6, wherein operation of the receiver signal processor unit, the receiver signal processor unit and the source signal processor unit are synchronized to one another through the availability of the FIFO channel, the further FIFO channel, the return FIFO channel and the further return FIFO channel for emptying and filling these FIFO channels in their respective FIFO sequences.

8. A signal processing apparatus according to claim 6, comprising a respective counter for each memory address indicator, for counting the number of times the corresponding memory address indicator has been returned after having been sent, the region of memory indicated by each memory address indicator being written into in response to detection that the counter has reached a predetermined value.

9. A method of processing successive signal data items relating to samples along at least one dimension of an at least one dimensional physical signal, the method comprising writing the data items to a memory with a source signal processing unit and reading the data items from memory with a receiver signal processing unit, operation of the source signal unit and the receiver signal processing unit being synchronized by means of a FIFO channel, by successively sending memory address indicators to the receiver signal processor unit via the FIFO channel, each memory address indicator indicating an address of a region in the memory where one of the signal data items has been written, when that one of the signal data items is available for reception, reading and writing of the receiver signal processor unit and the source signal processor unit respectively being synchronized to one another through the availability of the FIFO channel for emptying and filling the FIFO channel in a FIFO sequence, sending the memory address indicators back to the source signal processor unit via a return FIFO channel coupled between the receiver signal processor unit and the source signal processor unit, when the receiver signal processor unit has finished reading the corresponding signal data-items, receiving the memory address indicators back from the return FIFO channel by the source signal processor unit, reusing by the source signal processor unit the corresponding region of the memory for writing a subsequent signal data item.

## Patentansprüche

1. Signalverarbeitungsvorrichtung, umfassend:
einen Speicher (16);
eine Quellensignalprozessoreinheit (10), die so ausgeführt ist, dass sie eine Serie von Signaldatenelementen in den Speicher schreibt, wobei sich aufeinanderfolgende Signaldatenelemente auf Abtastwerte längs wenigstens einer Dimension eines wenigstens eindimensionalen physikalischen Signals beziehen;
eine Empfängersignalprozessoreinheit (12), die so ausgeführt ist, dass sie die Serie von Signaldatenelementen aus dem Speicher liest;
einen FIFO-Kanal (14) zwischen der Quellensignalprozessoreinheit und der Empfängersignalprozessoreinheit, wobei die Quellensignalprozessoreinheit so ausgeführt ist, dass sie schrittweise Speicheradressindikatoren über den FIFO-Kanal zu der Empfängersignalprozessoreinheit sendet, wobei jeder Speicheradressindikator eine Adresse eines Bereichs im Speicher angibt, wo eines der Signaldatenelemente geschrieben worden ist, wenn dieses eine der Signaldatenelemente für den Empfang verfügbar ist, wobei das Lesen und das Schreiben der Empfängersignalprozessoreinheit und der Quellensignalprozessoreinheit jeweils durch die Verfügbarkeit des FIFO-Kanals gegenseitig synchronisiert werden, um den FIFO-Kanal in einer FIFO-Sequenz zu leeren und zu füllen;
einen Rückgabe-FIFO-Kanal (20), der zwischen der Empfängersignalprozessoreinheit und der Quellensignalprozessoreinheit angekoppelt ist, wobei die Empfängersignalprozessoreinheit so ausgeführt ist, dass sie schrittweise die Speicheradressindikatoren über den Rückgabe-FIFO-Kanal zu der Quellensignalprozessoreinheit zurücksendet, wenn die Empfängersignalprozessoreinheit das Lesen der entsprechenden Signaldatenelemente beendet hat, wobei die Quellensignalprozessoreinheit die Speicheradressindikatoren aus dem Rückgabe-FIFO-Kanal zurückempfängt, und wobei die Quellensignalprozessoreinheit den entsprechenden Bereich des Speichers wiederverwendet, um ein nachfolgendes Signaldatenelement zu schreiben.

2. Signalverarbeitungsvorrichtung nach Anspruch 1, die Initialisierungsmittel umfasst, die so ausgeführt sind, dass sie einen Satz von Speicheradressindikatoren in den Rückgabe-FIFO-Kanal einsetzen, wobei die Speicheradressindikatoren Bereiche des Speichers angeben, die der Quellensignalprozessoreinheit zum Schreiben der Datenelemente zugewiesen sind, wobei die Initialisierungsmittel wenigstens einen aus dem Satz der Speicheradressindikatoren vor dem Beginn der Verarbeitung durch die Quellensignalprozessoreinheit einsetzen.

3. Signalverarbeitungsvorrichtung nach Anspruch 1, wobei das Lesen und das Schreiben der Empfängersignalprozessoreinheit und der Quellensignalprozessoreinheit durch die Verfügbarkeit des FIFO-Kanals und des Rückgabe-FIFO-Kanals entsprechend miteinander synchronisiert werden, um den FIFO-Kanal und den Rückgabe-FIFO-Kanal in ihren jeweiligen FIFO-Sequenzen zu leeren und zu füllen.

4. Signalverarbeitungsvorrichtung nach Anspruch 1, die eine Umordnungssignalprozessoreinheit und einen weiteren FIFO-Kanal (32) umfasst, wobei die Quellensignalprozessoreinheit (10) über den FIFO-Kanal mit der Umordnungssignalprozessoreinheit gekoppelt ist, wobei die Umordnungssignalprozessoreinheit über den weiteren FIFO-Kanal mit der Empfängersignalprozessoreinheit (12) gekoppelt ist, wobei die Umordnungssignalprozessoreinheit so ausgeführt ist, dass sie die Speicheradressindikatoren vom FIFO-Kanal in einer ankommenden Sequenz empfängt und die empfangenen Speicheradressindikatoren in einer umgeordneten Sequenz, die sich von der ankommenden Sequenz unterscheidet, zu der Empfängersignalprozessoreinheit sendet, wobei die Operation der Empfängersignalprozessoreinheit und der Quellensignalprozessoreinheit über die Verfügbarkeit des FIFO-Kanals miteinander synchronisiert sind, um den FIFO-Kanal in der ankommenden FIFO-Sequenz zu leeren und zu füllen, und wobei die Operation der Empfängersignalprozessoreinheit und der Umordnungssignalprozessoreinheit durch die Verfügbarkeit des weiteren FIFO-Kanals synchronisiert sind, um den weiteren FIFO-Kanal in der umgeordneten FIFO-Sequenz zu leeren und zu füllen.

5. Signalverarbeitungsvorrichtung nach Anspruch 1, die eine Umordnungssignalprozessoreinheit und einen weiteren FIFO-Kanal (32) umfasst, wobei die Quellensignalprozessoreinheit über den FIFO-Kanal mit der Umordnungssignalprozessoreinheit gekoppelt ist, wobei die Umordnungssignalprozessoreinheit über den weiteren FIFO-Kanal mit der Empfängersignalprozessoreinheit gekoppelt ist, wobei die Umordnungssignalprozessoreinheit so ausgeführt ist, dass sie die Speicheradressindikatoren vom FIFO-Kanal in einer ankommenden Sequenz empfängt und die empfangenen Speicheradressindikatoren in einer umgeordneten Sequenz, die sich von der ankommenden Sequenz unterscheidet, zu der Empfängersignalprozessoreinheit sendet, wobei die Operation der Empfängersignalprozessoreinheit und der Quellensignalprozessoreinheit über die Verfügbarkeit des FIFO-Kanals miteinander synchronisiert sind, um den FIFO-Kanal in der ankommenden FIFO-Sequenz zu leeren und zu füllen, und wobei die Operation der Empfängersignalprozessoreinheit und der Umordnungssignalprozessoreinheit durch die Verfügbarkeit des weiteren FIFO-Kanals synchronisiert sind, um den weiteren FIFO-Kanal in der umgeordneten FIFO-Sequenz zu leeren und zu füllen, wobei das Schreiben mittels der Quellensignalprozessoreinheit mit dem Lesen mittels der Empfängersignalprozessoreinheit durch die Verfügbarkeit des Rückgabe-FIFO-Kanals synchronisiert ist, um den Rückgabe-FIFO-Kanal in der FIFO-Sequenz des Rückgabe-FIFO-Kanals zu leeren und zu füllen.

6. Signalverarbeitungsvorrichtung nach Anspruch 1, umfassend:
eine weitere Empfängersignalprozessoreinheit (42), die so ausgeführt ist, dass sie die Serien der Datensignalelemente aus dem Speicher liest,
einen weiteren FIFO-Kanal (44) zwischen der Quellensignalprozessoreinheit und der weiteren Empfängersignalprozessoreinheit, wobei die Quellensignalprozessoreinheit so ausgeführt ist, dass sie schrittweise die Speicheradressindikatoren über den weiteren FIFO-Kanal zu der weiteren Empfängersignalprozessoreinheit sendet,
einen weiteren Rückgabe-FIFO-Kanal, der zwischen der weiteren Empfängersignalprozessoreinheit und der Quellensignalprozessoreinheit angekoppelt ist, wobei die weitere Empfängersignalprozessoreinheit so ausgeführt ist, dass sie schrittweise die Speicheradressindikatoren über den weiteren Rückgabe-FIFO-Kanal zu der Quellensignalprozessoreinheit zurücksendet, wenn die weitere Empfängersignalprozessoreinheit das Lesen der entsprechenden Signaldatenelemente beendet hat, wobei die Quellensignalprozessoreinheit die Speicheradressindikatoren von dem weiteren Rückgabe-FIFO-Kanal zurückempfängt, und wobei die Quellensignalprozessoreinheit einen Bereich des Speichers wiederverwendet, um ein nachfolgendes Signaldatenelement zu schreiben, wenn die Quellensignalprozessoreinheit die entsprechenden Speicheradressindikatoren sowohl vom Rückgabe-FIFO-Kanal als auch dem weiteren Rückgabe-FIFO-Kanal zurückempfangen hat.

7. Signalverarbeitungsvorrichtung nach Anspruch 6, wobei in der Operation der Empfängersignalprozessoreinheit die Empfängersignalprozessoreinheit und die Quellensignalprozessoreinheit durch die Verfügbarkeit des FIFO-Kanals, des weiteren FIFO-Kanals, des Rückgabe-FIFO-Kanals und des weiteren Rückgabe-FIFO-Kanals miteinander synchronisiert sind, um diese FIFO-Kanäle in ihren jeweiligen FIFO-Sequenzen zu leeren und zu füllen.

8. Signalverarbeitungsvorrichtung nach Anspruch 6, die einen entsprechenden Zähler für jeden Speicheradressindikator umfasst, um die Häufigkeit zu zählen, mit der der entsprechende Speicheradressindikator zurückgegeben worden ist, nachdem er gesendet worden ist, wobei in den Bereich des Speichers, der von dem jeweiligen Speicheradressindikator angegeben wird, in Reaktion auf die Feststellung geschrieben wird, dass der Zähler einen vorgegebenen Wert erreicht hat.

9. Verfahren zum Verarbeiten aufeinanderfolgender Signaldatenelemente, die sich auf Abtastwerte längs wenigstens einer Dimension eines wenigstens eindimensionalen physikalischen Signals beziehen, wobei das Verfahren umfasst:
Schreiben der Datenelemente in einen Speicher mit einer Quellensignalverarbeitungseinheit und Lesen der Datenelemente aus dem Speicher mit einer Empfängersignalverarbeitungseinheit, wobei die Operation der Quellensignaleinheit und der Empfängersignalverarbeitungseinheit mittels eines FIFO-Kanals synchronisiert wird, indem schrittweise Speicheradressindikatoren über den FIFO-Kanal zur Empfängersignalprozessoreinheit gesendet werden, wobei jeder Speicheradressindikator eine Adresse eines Bereichs im Speicher angibt, wo eines der Signaldatenelemente geschrieben worden ist, wenn dieses eine der Signaldatenelemente zum Empfang verfügbar ist, wobei das Lesen und das Schreiben der Empfängersignalprozessoreinheit und der Quellensignalprozessoreinheit jeweils durch die Verfügbarkeit des FIFO-Kanals miteinander synchronisiert werden, um den FIFO-Kanal in einer FIFO-Sequenz zu leeren und zu füllen; Senden der Speicheradressindikatoren zurück zu der Quellensignalprozessoreinheit über einen Rückgabe-FIFO-Kanal, der zwischen der Empfängersignalprozessoreinheit und der Quellensignalprozessoreinheit angekoppelt ist, wenn die Empfängersignalprozessoreinheit das Lesen der entsprechenden Signaldatenelemente beendet hat; Zurückempfangen der Speicheradressindikatoren vom Rückgabe-FIFO-Kanal mittels der Quellensignalprozessoreinheit; und Wiederverwenden des entsprechenden Bereichs des Speichers mittels der Quellensignalprozessoreinheit zum Schreiben eines nachfolgenden Signaldatenelements.

## Revendications

1. Appareil de traitement du signal, comprenant :
- une mémoire (16) ;
- une unité de traitement du signal source (10), agencée de manière à écrire une série d'éléments de données de signaux dans la mémoire, les éléments de données de signaux successifs ayant trait à des échantillons le long d'une dimension au moins d'un signal physique monodimensionnel au moins ;
- une unité de traitement du signal réceptrice (12), agencée de manière à lire la série d'éléments de données de signaux à partir de la mémoire ;
- un canal FIFO (14) entre l'unité de traitement du signal source et l'unité de traitement du signal réceptrice, l'unité de traitement du signal source étant agencée de manière à envoyer successivement des indicateurs d'adresses de mémoire à l'unité de traitement du signal réceptrice par l'intermédiaire du canal FIFO, chaque indicateur d'adresses de mémoire indiquant une adresse d'une région dans la mémoire où un des éléments de données de signaux a été écrit, lorsque cet élément de données de signaux est disponible pour être reçu, la lecture et l'écriture de l'unité de traitement du signal réceptrice et de l'unité de traitement du signal source respectivement étant synchronisées l'une avec l'autre par la disponibilité du canal FIFO en vue de vider et de remplir le canal FIFO en une séquence FIFO ;
- un canal FIFO de retour (20) raccordé entre l'unité de traitement du signal réceptrice et l'unité de traitement du signal source, l'unité de traitement du signal réceptrice étant agencée de manière à renvoyer successivement les indicateurs d'adresses de mémoire à l'unité de traitement du signal source par l'intermédiaire du canal FIFO de retour, lorsque l'unité de traitement du signal réceptrice a fini de lire les éléments de données de signaux correspondants, l'unité de traitement du signal source recevant les indicateurs d'adresses de mémoire en retour par le canal FIFO de retour, l'unité de traitement du signal source réutilisant la région de la mémoire correspondante pour écrire un élément de données de signaux ultérieur.

2. Appareil de traitement du signal selon la revendication 1, comprenant des moyens d'initialisation agencés de manière à insérer un ensemble d'indicateurs d'adresses de mémoire dans la FIFO de retour, les indicateurs d'adresse de mémoire indiquant des régions de mémoire allouées à l'unité de traitement du signal source pour écrire les éléments de données, les moyens d'initialisation insérant au moins un ensemble d'indicateurs d'adresses de mémoire avant le démarrage du traitement par l'unité de traitement du signal source.

3. Appareil de traitement du signal selon la revendication 1, dans lequel la lecture et l'écriture de l'unité de traitement du signal réceptrice et de l'unité de traitement du signal source respectivement sont synchronisées l'une avec l'autre par la disponibilité du canal FIFO et du canal FIFO de retour, en vue de vider et de remplir le canal FIFO et le canal FIFO de retour dans leurs séquences FIFO respectives.

4. Appareil de traitement du signal selon la revendication 1, comprenant une unité de traitement du signal de ré-ordonnancement (30) et un canal FIFO complémentaire (32), l'unité de traitement du signal source (10) étant raccordée à l'unité de traitement du signal de ré-ordonnancement par l'intermédiaire du canal FIFO, l'unité de traitement du signal de ré-ordonnancement étant raccordée à l'unité de traitement du signal réceptrice (12) par le canal FIFO complémentaire, l'unité de traitement du signal de ré-ordonnancement étant agencée de manière à recevoir les indicateurs d'adresses de mémoire à partir du canal FIFO selon une séquence d'entrée et à envoyer les indicateurs d'adresses de mémoire reçus à l'unité de traitement du signal réceptrice selon une séquence réaménagée qui diffère de la séquence d'entrée, le fonctionnement de l'unité de traitement du signal réceptrice et de l'unité de traitement du signal source étant synchronisé l'une avec l'autre par la disponibilité du canal FIFO, en vue de vider et de remplir le canal FIFO dans la séquence FIFO d'entrée, le fonctionnement de l'unité de traitement du signal réceptrice et de l'unité de traitement du signal de ré-ordonnancement étant synchronisées l'une avec l'autre par la disponibilité du canal FIFO complémentaire, en vue de vider et de remplir le canal FIFO complémentaire dans la séquence FIFO réaménagée.

5. Appareil de traitement du signal selon la revendication 1, comprenant une unité de traitement du signal de ré-ordonnancement (30) et un canal FIFO complémentaire (32), l'unité de traitement du signal source étant raccordée à l'unité de traitement du signal de ré-ordonnancement par l'intermédiaire du canal FIFO, l'unité de traitement du signal de ré-ordonnancement étant raccordée à l'unité de traitement du signal réceptrice par le canal FIFO complémentaire, l'unité de traitement du signal de ré-ordonnancement étant agencée de manière à recevoir les indicateurs d'adresses de mémoire à partir du canal FIFO selon une séquence d'entrée et à envoyer les indicateurs d'adresses de mémoire reçus à l'unité de traitement du signal réceptrice selon une séquence réaménagée qui diffère de la séquence d'entrée, les fonctionnements de l'unité de traitement du signal réceptrice et de l'unité de traitement du signal source étant synchronisés l'un avec l'autre par la disponibilité du canal FIFO, en vue de vider et de remplir le canal FIFO dans la séquence FIFO d'entrée, les fonctionnements de l'unité de traitement du signal réceptrice et de l'unité de traitement du signal de ré-ordonnancement étant synchronisés l'un avec l'autre par la disponibilité du canal FIFO complémentaire, en vue de vider et de remplir le canal FIFO complémentaire dans la séquence FIFO réaménagée, l'écriture par l'unité de traitement du signal source étant synchronisée à la lecture par l'unité de traitement du signal réceptrice, la disponibilité du canal FIFO de retour en vue de vider et de remplir le canal FIFO de retour dans la séquence FIFO du canal FIFO de retour.

6. Appareil de traitement du signal selon la revendication 1, comprenant :
- une unité complémentaire de traitement du signal réceptrice (42), agencée de manière à lire la série d'éléments de données de signaux à partir de la mémoire ;
- un canal FIFO complémentaire (44) entre l'unité de traitement du signal source et l'unité complémentaire de traitement du signal réceptrice, l'unité de traitement du signal source étant agencée de manière à envoyer successivement les indicateurs d'adresses de mémoire à l'unité complémentaire de traitement du signal réceptrice par l'intermédiaire du canal FIFO complémentaire,
- un canal complémentaire FIFO de retour raccordé entre l'unité complémentaire de traitement du signal réceptrice et l'unité de traitement du signal source, l'unité complémentaire de traitement du signal réceptrice étant agencée de manière à renvoyer successivement les indicateurs d'adresses de mémoire à l'unité de traitement du signal source par l'intermédiaire du canal complémentaire FIFO de retour, lorsque l'unité complémentaire de traitement du signal réceptrice a fini de lire les éléments de données de signaux correspondants, l'unité de traitement du signal source recevant les indicateurs d'adresses de mémoire en retour par le canal complémentaire FIFO de retour, l'unité de traitement du signal source réutilisant une région de la mémoire pour écrire un éléments de données de signaux ultérieur, lorsque l'unité de traitement du signal source a reçu en retour l'indicateur d'adresse de mémoire correspondant à la fois du canal FIFO de retour et du canal complémentaire FIFO de retour.

7. Appareil de traitement du signal selon la revendication 6, dans lequel les fonctionnements de l'unité de traitement du signal réceptrice, de l'unité de traitement du signal réceptrice et de l'unité de traitement du signal source sont synchronisés les uns avec les autres par la disponibilité du canal FIFO, du canal complémentaire FIFO, du canal FIFO de retour et du canal complémentaire FIFO de retour, en vue de vider et de remplir ces canaux FIFO dans leurs séquences FIFO respectives.

8. Appareil de traitement du signal selon la revendication 6, comprenant un compteur respectif pour chaque indicateur d'adresses de mémoire, pour compter le nombre de fois où l'indicateur d'adresses de mémoire correspondant a été renvoyé après avoir été envoyé, la région de mémoire indiquée par chaque indicateur d'adresses de mémoire étant écrite en réponse à la détection du fait que le compteur a atteint une valeur prédéterminée.

9. Procédé de traitement d'éléments de données de signaux successifs ayant trait à des échantillons le long d'une dimension au moins d'un signal physique monodimensionnel au moins, le procédé comprenant l'écriture, avec une unité de traitement du signal source, des éléments de données de signaux vers une mémoire et la lecture des éléments de données de signaux à partir de la mémoire avec une unité de traitement du signal réceptrice, les fonctionnements de l'unité de traitement du signal source et de l'unité de traitement du signal réceptrice étant synchronisés au moyen d'un canal FIFO, par envoi successif d'indicateurs d'adresses de mémoire à l'unité de traitement du signal réceptrice par l'intermédiaire du canal FIFO, chaque indicateur d'adresses de mémoire indiquant une adresse d'une région dans la mémoire où un des éléments de données de signaux a été écrit, lorsque cet élément de données de signaux est disponible pour être reçu, la lecture et l'écriture de l'unité de traitement du signal réceptrice et de l'unité de traitement du signal source respectivement étant synchronisées l'une avec l'autre par la disponibilité du canal FIFO en vue de vider et de remplir le canal FIFO en une séquence FIFO, le renvoi des indicateurs d'adresses de mémoire à l'unité de traitement du signal source par l'intermédiaire d'un canal FIFO de retour raccordé entre l'unité de traitement du signal réceptrice et l'unité de traitement du signal source, lorsque l'unité de traitement du signal réceptrice a fini de lire les éléments de données de signaux correspondants, la réception, par l'unité de traitement du signal source, des indicateurs d'adresses de mémoire en retour par le canal FIFO de retour, la réutilisation, par l'unité de traitement du signal source, de la région de la mémoire correspondante pour écrire un élément de données de signaux ultérieur.
